Europäisches Patentamt

European Patent Office

Office européen des brevets

(11) Veröffentlichungsnummer: **0 264 034**
**A2**

(12) **EUROPÄISCHE PATENTANMELDUNG**

(21) Anmeldenummer: 87114399.6

(22) Anmeldetag: 02.10.87

(51) Int. Cl.⁴ **G01L 5/24**

(30) Priorität: 14.10.86 DE 3634895

(43) Veröffentlichungstag der Anmeldung:
20.04.88 Patentblatt 88/16

(84) Benannte Vertragsstaaten:
**DE ES FR GB IT SE**

(71) Anmelder: **EGM Entwicklungsgesellschaft für Montagetechnik GmbH & Co. KG**
**Gutenbergstrasse 4**
**D-3012 Langenhagen 1(DE)**

(72) Erfinder: **Badur, Klaus**
**Scheelenkamp 14**
**D-3008 Garbsen-Berenbostel 4(DE)**
Erfinder: **Kalter, Detlef**
**Hartungstrasse 9**
**D-2800 Bremen 1(DE)**
Erfinder: **Fröhlich, Stephan**
**Ringstrasse 25**
**D-3014 Laatzen 4(DE)**

(74) Vertreter: **Bolte, Erich, Dipl.-Ing. et al**
**c/o Meissner, Bolte & Partner Patentanwälte**
**Hollerallee 73**
**D-2800 Bremen 1(DE)**

(54) **Verfahren und Vorrichtung zum Anziehen einer Schraubverbindung.**

(57) Beim Anziehen von Schraubverbindungen sollen diese bis über die Streckgrenze in den plastischen Bereich hinein in reproduzierbarer Weise angezogen werden. Es wird vorgeschlagen, den Anziehvorgang frühestens dann zu beenden, wenn entweder die Differenz des Drehmomentes zu einer, dem linearen Bereich des Drehmomentverlaufes über den Drehwinkel angenäherten Geraden einen voreingestellten Wert überschreitet oder das Integral der Differenzkurve einen voreingestellten Wert unterschreitet.

EP 0 264 034 A2

## Verfahren und Vorrichtung zum Anziehen einer Schraubverbindung

Die Erfindung betrifft ein Verfahren nach dem Oberbegriff des Patentanspruches 1, sowie eine Vorrichtung zur Durchführung des Verfahrens.

In automatisierten Fertigungsverfahren, insbesondere im Motoren-und Automobilbau werden Schraubverbindungen von Automaten hergestellt. Derartige Automaten weisen Elektroschrauber auf, welche z. B. die von Hand aufgedrehten Muttern selbsttätig festziehen. Hierbei besteht das Problem, die Schraubverbindung in exakt reproduzierbarer Weise anzuziehen, so daß z. B. der Zylinderkopf mit einem vorgegebenen Anpreßdruck auf dem Motorblock sitzt.

Es ist allgemein bekannt, daß man - ähnlich wie bei der Montage per Hand - den Einschraubvorgang dann abbrechen kann, wenn das aufgebrachte Drehmoment, das ja dem Anpreßdruck im wesentlichen proportional ist, einen bestimmten Betrag erreicht hat.

Um Kosten zu sparen, wählt man die Festigkeit der Schraubverbindung, z. B. den Durchmesser des Stehbolzens, nur so groß, daß gerade die gewünschte Haltekraft aufgenommen werden kann. Beim Anziehen dieser Schraubverbindung belastet man nun das Material bis über den Hookschen Bereich, so daß eine Längung eintritt.

Aus der DE-OS 17 03 681 ist eine Schraubvorrichtung bekannt, bei der das Anziehen der Schraube dann abgebrochen wird, wenn die Steigung des Drehmomentes nach dem Drehwinkel einen vorgegebenen Wert erreicht hat. Hier wird die Erkenntnis angewendet, daß beim Anziehen einer Schraubverbindung zunächst ein linearer Bereich (elastische Verformung) des Drehmomentes nach dem Drehwinkel vorliegt und sich die Steigung der Kurve nach Erreichen der Fließgrenze vermindert. Hierbei wird davon ausgegangen, daß der Verlauf des Anziehvorganges bekannt und vorhersagbar ist. Es ist hier also immer notwendig, zunächst eine Probe-Schraubverbindung zu schaffen, um die gewünschte Kurvensteigung messen und in der Schraubvorrichtung speichern zu können.

Aus der DE-PS 23 36 896 ist eine Vorrichtung bekannt, bei der zunächst die Steigung der Kurve im linearen Bereich gemessen und gespeichert wird und dann, sobald sich die Steigung der Kurve ändert bzw. abflacht, das Verhältnis zwischen dieser (maximalen) Steigung und der momentanen Kurvensteigung ermittelt und mit einem (Minimal-) Wert verglichen wird. Sobald dieser Minimalwert unterschritten wird, stoppt der Schrauber. Der Nachteil bei dieser Vorrichtung bzw. Methode ist aber der, daß die Momentenkurve nicht ideal glatt bzw. stetig verläuft, sondern aufgrund von Materialrauhigkeiten wellig. Dies führt dazu, daß die erste Ableitung bzw. deren Resultat einen derart schwankenden Verlauf hat, daß die Schwelle bereits bei viel zu hohen Krümmungs-Mittelwer ten überschritten wird. Man versucht sich dadurch zu behelfen, daß man den Schrauber erst nach einer bestimmten Anzahl von Unterschreitungen des Schwellenwertes stoppt. Wenn aber diese Anzahl zu groß gewählt wurde, kann der Schrauber überhaupt nich mehr abgestoppt werden, da nach dem Erreichen des gewünschten Krümmungswertes keine weitere Schwellenunterschreitung mehr vorkommt.

Ausgehend vom oben genannen Stand der Technik ist es Aufgabe der vorliegenden Erfindung ein Verfahren der eingangs genannten Art dahingehend weiterzubilden, daß eine korrekte Abschaltung des Schraubers bei reproduzierbaren Längungswerten erzielbar ist.

Diese Aufgabe wird durch die im Kennzeichen eines der Ansprüche 1 oder 2 angegebenen Merkmale gelöst, Vorrichtungen zur Durchführung des Verfahrens ergeben sich aus einem der Ansprüche 6 oder 7.

Beiden Verfahren liegt die Idee zugrunde, daß in jedem Fall ein gewisser Abschnitt der Drehmomentkurve ab Überschreiten des Schwellenmomentes ($M_S$) linear sein muß. In diesem linearen Bereich wird eine (hypothetische) Gerade gelegt, die aufgrund der möglichen Mittelung die tatsächlich auftretenden Spannungen bzw. deren Verlauf in der Schraubverbindung besser repräsentiert als es direkte Messungen durch die wegen der Materialunebenheiten im Gewinde usw. auftretenden Meßschwankungen zulassen. Die Abweichung von dieser idealisierenden Geraden repräsentiert dann in exakter Weise den tatsächlich gewünschten Punkt, bei dem eine bestimmte Längung eingetreten ist.

Die erste Ausführungsform der Erfindung betrachtet die (einfache) Differenz zwischen Gerade und tatsächlicher Kurve, wobei man entweder die Gerade unterhalb der Meßkurve verlaufen lassen kann und nach dem Schnittpunkt zwischen Gerader und Meßkurve sucht oder aber die Gerade in die Meßkurve legt und nach einem Differenz-Grenzwert sucht, bei dem man den Schrauber abschaltet.

Die zweite Ausführungsform der Erfindung betrachtet das Integral (Bei digitaler Arbeitsweise die Summe) über die Differenzen, wodurch sich eine Filterung der immer noch mit den Störungen überlagerten Meßkurve ergibt, da man einen Integrator als Tiefpaß erster Ordnung betrachten kann, der eine Glättung der Meßkurve vornimmt.

Das Schwellenmoment ($M_S$) kann als voreingestellter, bekannter Wert aufgefaßt werden, man kann es aber auch aus dem Kurvenverlauf und dort wiederum insbesondere aus dem Verlauf der zweiten Ableitung der Drehmomentkurve festlegen, da die zweite Ableitung bei dem zum Schwellenmoment ($M_S$) gehörenden Schwellenwinkel ($\beta_S$) ein (Zwischen-)Maximum hat, dem ein Maximum der ersten Ableitung vorausgegangen ist.

Man kann die mittlere Kurvensteigung aus einer Mittelung der Einzelsteigungswerte über ein voreingestelltes Winkelintervall ermitteln, was die einfachste Lösung darstellt. Bei einer anderen bevorzugten Ausführungsform des Verfahrens führt man eine gleitende Mittelung über ein voreingestelltes Winkelintervall aus, wobei für jeden neu dazukommenden Meßwert der letzte Meßwert "vergessen" wird, und nimmt als Grundlage für die weitere Berechnung den Maximal-Steigungswert aus dieser Messung.

Bei einer weiteren Ausführungsform der Erfindung bildet man den fortlaufenden Mittelwert (ab Überschreiten des Schwellenmomentes) der Steigung und läßt die idealisierte Gerade (mit dem errechneten Steigungswert) mitlaufen. Man aktualisiert also die errechnete Gerade bei jeder Mittelwertsbildung. Der endgültige, dem Abstoppvorgang zugrundegelegte Steigungswert wird dann festgehalten, wenn bei der fortlaufenden Mittelung der nächste ermittelte Steigungswert einen vorbestimmten Betrag vom vorliegenden Mittelwert abweicht.

Weitere bevorzugte Ausführungsformen der Erfindung ergeben sich aus den Unteransprüchen und den nachfolgenden Ausführungsbeispielen, die anhand von Abbildungen näher definiert werden. Hierbei zeigt:

Fig. 1-3 Diagramme zur Darstellung des Drehmomentverlaufes über den Drehwinkel und

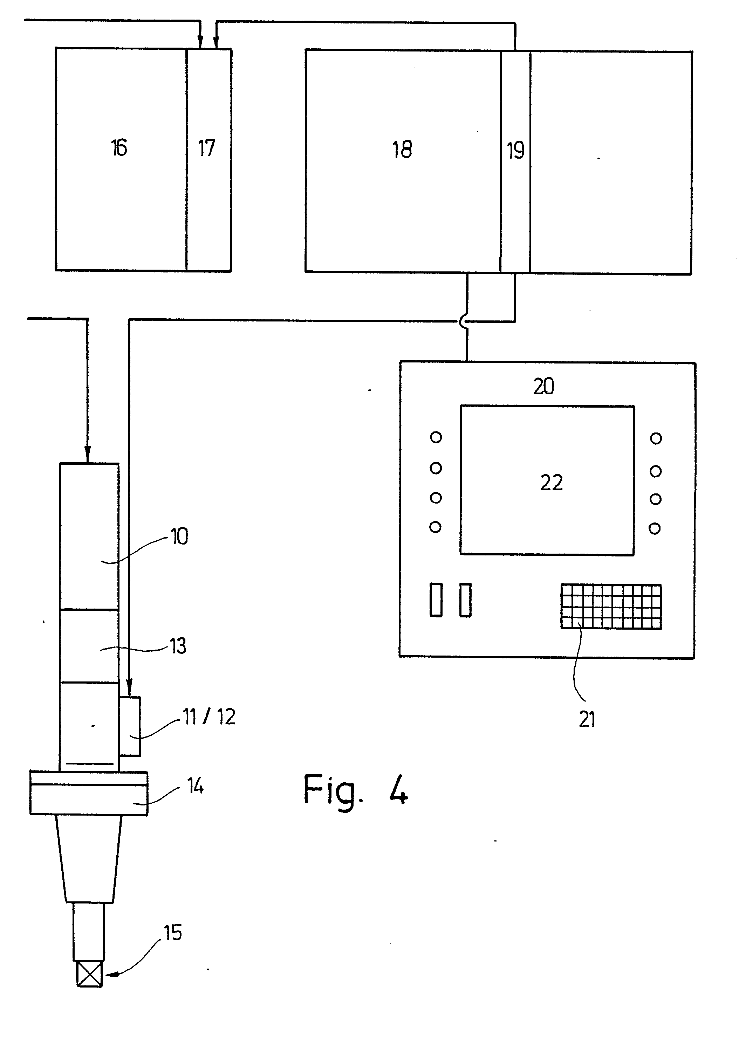

Fig. 4 ein schematisiertes Blockschaltbild der Vorrichtung zur Durchführung des Verfahrens.

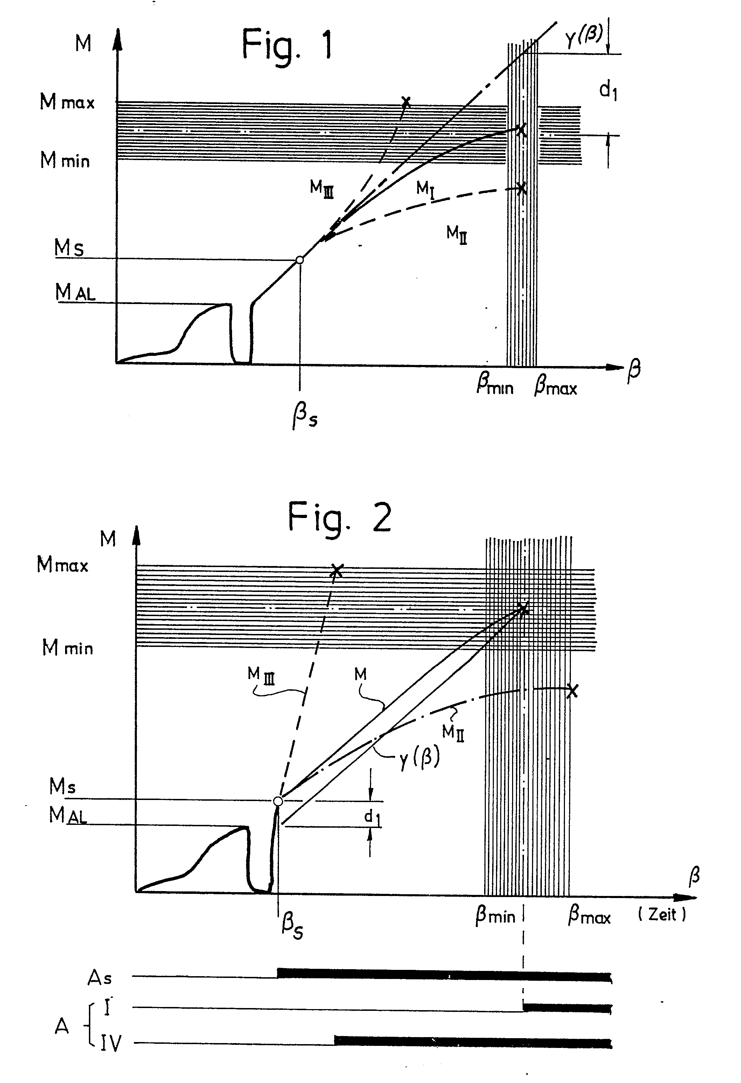

Zunächst werden anhand der Fig. 1-3 die beiden Ausführungsformen des erfindungsgemäßen Verfahrens näher erläutert. In den Abbildungen ist nach oben das auf die Verschraubung aufgebrachte Drehmoment M, nach rechts der Drehwinkel $\beta$, bzw. bei konstanter Drehgeschwindigkeit, die Zeit aufgetragen.

Wenn man mit einem Elektroschrauber eine Mutter auf einen Stehbolzen aufsetzt, so steigt zunächst das aufgebrachte Drehmoment bis zum Anlegemoment $M_{AL}$ an und fällt dann während des Eindrehens der Schraube fast bis gegen Null ab. Sobald die Mutter Flächenkontakt hat, steigt - Kontakt der zu fügenden Teile vorausgesetzt - das Drehmoment bis zum Schwell-Drehmoment $M_s$ steil an und geht dann in einen linearen Bereich über. Dieser lineare Bereich bedeutet, daß der Stehbolzen bzw. alle übrigen elastisch verformbaren Teile, gespannt wird. Die sich ergebende Kurve ist mit $M_I$ bezeichnet. Wenn das Material des Stehbolzens über den Hookschen Bereich gespannt wird, so beginnt sich die Kurve $M_I$ abzuflachen, weicht also vom linearen Verlauf ab. Wenn ein bestimmtes Maß der Längung des Bolzens erreicht ist muß der Elektroschrauber abgeschaltet bzw. gestoppt werden.

In Fig. 1 ist ein Fall gezeigt, bei dem Schwellenmoment $M_S$, ab dem die Mittlung der Kurvensteigung bzw. die Errechnung der "Hilfskurve" y ($\beta$) erfolgt, relativ hoch gewählt ist, also nicht dem tatsächlich auftretenden Schwellmoment entspricht. Dennoch verläuft ab Überschreiten dieses "fiktiven" Schwellenmoments $M_S$ die Drehmomentkurve $M_I$ noch über einen gewissen Abschnitt linear, so daß die Kurve y ($\beta$) gebildet werden kann. Sobald nun die Momentenkurve $M_I$ um einen vorbestimmten Betrag von der idealisierten Kurve y ($\beta$) abweicht, wird begonnen, die Differenz zwischen $M_I$ und der Kurve y ($\beta$) zu messen. Das Meßergebnis wird mit einem voreingestellten Wert $d_1$ verglichen. Sobald die Kurve $M_I$ von der Geraden y ($\beta$) um den Betrag $d_1$ abweicht wird ein Ausgangssignal A gegeben (Kurve I), das zun Anhalten des Elektroschraubers führt.

Dadurch, daß mit der Errechnung der Steigung der Kurve y ($\beta$) erst nach Überschreiten des fiktiven Schwellenmomentes $M_S$ begonnen wird, kann ein unkorrektes Abstoppsignal A vermieden werden, das z. B. im steilen Drehmomentabfall nach Erreichen des Anlegemomentes $M_{AL}$ auftreten würde.

Bei der in Fig. 2 gezeigten Ausführungsform dieser Erfindungsvariante wird die Kurve y ($\beta$) ab Erreichen des Schwellenmomentes $M_S$ als unterhalb der Drehmomentkurve M verlaufende Gerade gebildet. Hierzu muß lediglich der Konstantwert der Funktion $y = a + b\beta$ um den Betrag $d_1$ verringert werden.

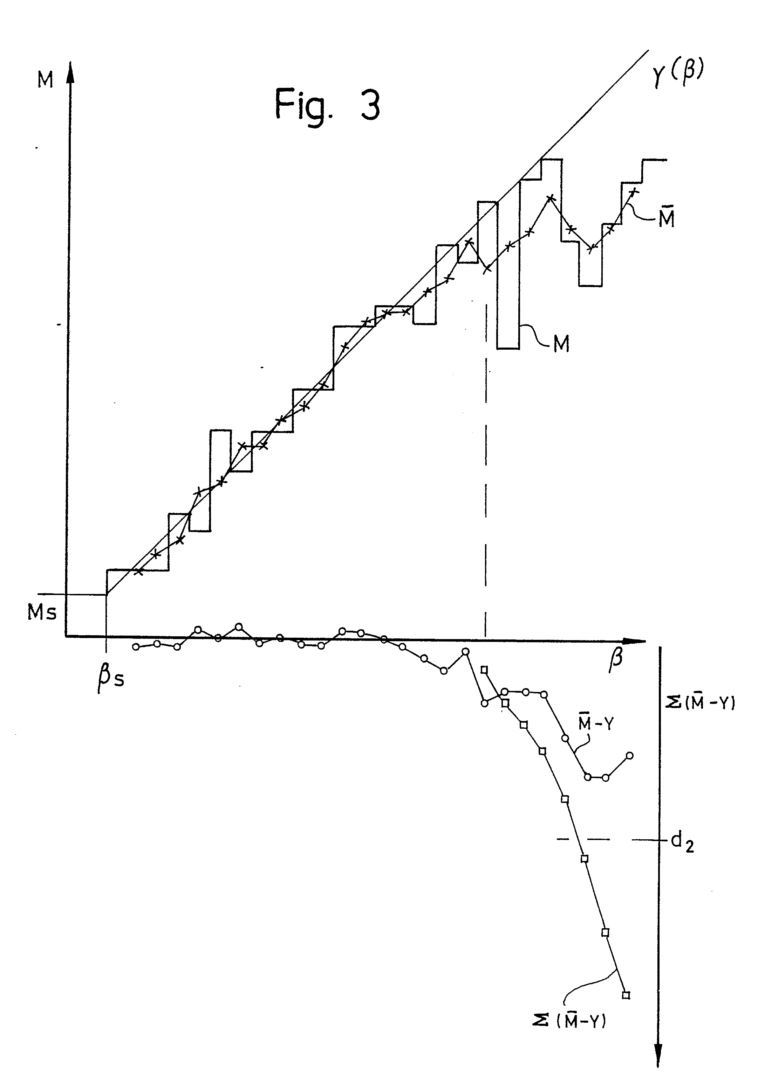

Der Kurvenverlauf in den beiliegenden Fig. 1 und 2 ist stark idealisiert gezeichnet. In Wirklichkeit verläuft die Drehmomentkurve sehr unruhig, da jegliche Materialunebenheiten (in den Gewindegängen) zu Schwankungen führen. Weiterhin liegen die Meßergebnisse von Drehmo mentgeber und Drehwinkelgeber als digitalisierte Werte vor, so daß sich in etwa der in Fig. 3 gezeigte Verlauf des Drehmomentes M ergibt. Anhand dieser Abbildung wird nun im folgenden die zweite Variante der Erfindung beschrieben.

Auch hier wird mit der eigentlichen Überwachung der Drehmomentkurve zum Abstoppen des Elektroschraubers erst nach dem Überschreiten des Schwellenmomentes $M_S$ bzw. nach Überschreiten des Schwellenwinkels $\beta_S$ begonnen. Bei der in Fig. 3 gezeigten Variante, bei der die

Gerade y ($\beta$) als ideale Gerade gezeichnet ist, wird eine gleitende Mittlung der Drehmomentkurve M über drei Meßpunkte durchgeführt. Die resultierende Mittelwertskurve ist mit $\bar{M}$ bezeichnet.

Weiterhin wird ab Überschreiten des Schwellenmomentes $M_S$ kontinuierlich die Differenz zwischen der Geraden y ($\beta$) und der Mittelwertskurve $\bar{M}$ errechnet, die in Fig. 3 mit Punktsymbolen aufgezeichnet ist. Diese Differenzkurve wird nun ständig überwacht. Es wird dann - wie oben beschrieben - das Nachführen der Steigung der Geraden y ($\beta$) beendet, wenn die Diffenrenz zwischen tatsächlich gemessenem Drehmomentwert M und gemitteltem Wert $\bar{M}$ einen definierten Betrag überschritten hat. Dieser Punkt ist in Fig. 3 mit einer senkrechten, unterbrochenen Linie markiert.

Gleichzeitig zur Bildung der Differenzkurve wird das Integral dieser Kurve gebildet - bzw. bei digitaler Arbeitsweise die Summenkurve. In Fig. 3 ist der Übersichtlichkeit halber der erste Punkt dieser Summenkurve beim Überschreiten des vorgenannten Grenzwertes aufgezeichnet. Das Abschaltsignal A wird erst dann gegeben, wenn nicht die Differenzkurve (wie bei der ersten Ausführungsform der Erfindung), sondern die Summenkurve eine Schwelle $d_2$ unterschreitet. Wie man nämlich aus der Fig. 3 leicht erkennen kann, ist die Summenkurve wesentlich glatter als die Differenzkurve, was daher rührt daß die Summenbildung im Ergebnis einer Tiefpaßfilterung gleichkommt.

Bei einer weiteren Ausführungsform der Erfindung wird die Errechnung des Steigungswertes b der Kurve y ($\beta$) dann beendet, wenn nicht die Differenz zwischen y ($\beta$) und Drehmomentkurve M ($\beta$) einen definierten Wert überschreitet, sondern dann, wenn die vorher beschriebene Summenkurve einen ersten, dem Betrag nach niedrigeren Schwellenwert unterschreitet, als derjenige, der zum Ausgeben des Stoppsignals (A) führt. Auch hier liegt der Vorteil insbesondere in der Glättung der Meßkurve.

Vorzugsweise werden, um fehlerhafte Schraubverbindungen, die in grundsätzlich abweichenden Drehmomentkurven resultieren, wie sie in Fig. 1 und 2 mit $M_{II}$ und $M_{III}$ bezeichnet sind aufzudecken, zusätzlich zum oben beschriebenen Verfahren noch weitere Entscheidungskriterien (mit Priorität) zur Erzeugung eines Abschaltsignales A verwendet.

Im Fall $M_{II}$, bei dem die voreingestellte Schwelle $d_1$ oder $d_2$ viel zu früh zu einem Abbruchvorgang des Einschraubens führt, wird ein Warnsignal an eine Bedienungsperson gegeben. Dieses Warnsignal ist dadurch ableitbar, daß der Drehwinkel $\beta$ ständig überwacht und mit einem voreingestellten Drehwinkel $\beta_{min}$ verglichen wird. Wenn das Ausgangssignal A vorliegt, der voreingestellte Mindestdrehwinkel $\beta_{min}$ aber noch nicht erreicht ist, erfolgt die Ausgabe des Warnsignals. Es ist also hier zu beachten, daß durch die vorliegende Erfindung die oft durchgeführt Überwachung "$\beta_{max}/M_{min}$" nicht notwendig ist.

Beim fehlerhaften Drehmomentverlauf $M_{III}$ wird das Abschaltsignal A dann gegeben, wenn das Drehmoment einen Maximalwert M überschreitet, ein minimaler Dreh winkelwert $\beta_{min}$ aber noch nicht erreicht wurde. Auch in diesem Fall wird ein Warnsignal gegeben (Kurve IV).

Im folgenden wird der prinzipielle Aufbau der Vorrichtung zur Durchführung des erfindungsgemäßen Verfahrens näher beschrieben. Wie aus Fig. 2 hervorgeht umfaßt der Elektroschrauber einen Elektromotor 10, dem ein Planetengetriebe 13 nachgeschaltet ist. Die Ausgangswelle des Planetengetriebes 13 geht über einen Drehwinkelgeber 11 und einen Drehmomentgeber 12 auf ein Spindellager 14, das eine Werkzeugaufnahme 15 trägt.

Der Elektromotor 10 ist vorzugsweise ein Drehstrommotor, der über einen Servoverstärker 17 angesteuert wird. Der Servoverstärker 17 unfaßt eine Vier-Quandrantensteuerung, die in Verbindung mit dem Drehstrommotor eine besonders exakte Steuerung (schnelles Abschalten) ermöglicht. Der Servoverstärker 17 wird von einem Netzteil 16 mit Strom versorgt.

Die Ausgangssignale des Drehwinkelgebers 11 und des Drehmomentgebers 12 werden über eine Meß-Interface 19 einer (handelsüblichen) Steuerelektronik 18 zugeführt. Die Steuerelektronik 18 steht über einen Datenbus mit einer Recheneinheit 20 in Verbindung, die eine Eingabetastatur 21 und einen Ausgabebildschirm 22 aufweist.

Das Meß-Interface 19 umfaßt zusätzlich ein Ausgabe-Interface, über das es mit dem Servoverstärker 17 verbunden ist.

Die Recheneinheit 20 ist vorzugsweise als Digitalrechner aufgebaut, der die oben bereits beschriebenen Rechen-und Vergleichsvorgänge durchführt und das Stopsignal A der Steuerungselektronik 18 zuführt. Über die Eingabetastatur 21 der Recheneinheit 20 werden die Schraubparameter, sowie die oben beschriebenen Grenzwerte eingegeben. Weiterhin findent in der Recheneinheit 20 auch die (Tiefpaß-) Filterung der Drehmomentkurve in an sich bekannter Weise statt.

Zur besseren Überwachung des Einschraubvorganges ist es von Vorteil, wenn die Drehmomentkurve über dem Drehwinkel auf dem Bildschirm 22 aufgezeichnet werden kann. Insbesondere ist es von Vorteil, wenn die Anzeige dann erfolgt, wenn ein Störungsfall (Kurven $M_{II}$ oder $M_{III}$) vorliegt. Der Verlauf der Drehmomentkurve kann dann der Bedienungsperson Aufschluß über den vorliegenden Fehler geben. Weiterhin ist es von Vorteil, wenn die Eingabe der Schraubparameter im interaktiven Betrieb über den Bildschirm 22 erfolgt, so daß die Bedienungsperson zur Einspeicherung betriebsnotwendiger Daten aufgefordert wird.

Eine zusätzliche Sicherheitsüberwachung ergibt sich in vorteilhafter Weise dann, wenn ein Abschaltsignal (zusätzlich zu den oben beschriebenen Kriterien) dann ausgegeben wird, wenn der dem Elektromotor 10 zugeführte Strom einen Maximalwert überschreitet. Dadurch ist sichergestellt, daß auch bei einer Fehleingabe des maximal aufzuwendenden Drehmomentes keine Überlastung des Motors 10 erfolgen kann. Die Maximalstrom-Einstellung kann auch auf einen Wert festgesetzt werden, der dem oben beschriebenen Maximaldrehmoment $M_{max}$ entspricht. Man erreicht dadurch eine doppelte Sicherung vor Zerstörung der Schraubverbindung, selbst wenn der Drehmomentgeber ausgefallen ist.

Eine Überwachung des Drehwinkelgebers 11 ist dadurch möglich, daß man dann, wenn trotz Stromzufuhr zum Elektromotor 10 keine Änderung des Drehwinkels $\beta$ erfolgt, die Anlage abschaltet und ein Alarmsignal ausgibt. Hierdurch wird sichergestellt, daß der oben beschriebene Drehmomentverlauf $M_{II}$, bei dem ja das maximale Drehmoment und auch die zweite Ableitung des Drehmomentes nie die Grenzwerte erreichen und dennoch ein Bruch der Schraub verbindung auftreten könnte, sicher vermieden wird.

Selbstverständlich erstreckt sich die Erfindung auch auf die möglichen Kombination der oben beschriebenen Merkmale.

## Ansprüche

1. Verfahren zum Anziehen einer Schraubverbindung, wobei man das aufgebrachte Drehmoment (M) und den Drehwinkel ($\beta$) mißt und den Anziehvorgang dann beendet, wenn die Verbindung die Streckgrenze überschreitet und sich im Bereich bleibender Längung befindet, **dadurch gekennzeichent, daß** man

a) während des Anziehens der Schraubverbindung kontinuierlich im Verlauf des Drehmomentes (M) nach dem Drehwinkel ($\beta$) ab Überschreiten einer ersten Drehmomentschwelle (Schwellenmoment $M_S$; Schwellenwinkel $\beta_S$) den Wert der Kurvensteigung (b) ermittelt;

b) einen Wert (a) aus der Differenz zwischen Schwellen moment ($M_S$) und dazugehörigem Schwellenwinkel ($\beta_S$) errechnet ($a = M_S - b\beta_S$);

c) den Anziehvorgang im wesentlichen dann beendet, wenn das momentan gemessene Drehmoment ($M(\beta)$) vom Wert der so ermittelten Geraden ($y = a + b\beta$) um einen voreingestellten Betrag ($d_1$) abweicht.

2. Verfahren zum Anziehen einer Schraubverbindung, wobei man das aufgebrachte Drehmoment (M) und den Drehwinkel ($\beta$) mißt und den Anziehvorgang dann beendet, wenn die Verbindung die Streckgrenze überschreitet und sich im Bereich bleibender Längung findet, dadurch gekennzeichnet, daß man

a) während des Anziehens der Schraubverbindung kontinuierlich im Verlauf des Drehmomentes (M) nach dem Drehwinkel ($\beta$) ab Überschreiten einer ersten Drehmomentschwelle (Schwellenmoment $M_S$; Schwellenwinkel $\beta_S$) den Wert der Kurvensteigung (b) ermittelt;

b) einen Wert (a) aus der Differenz zwischen Schwellenmoment ($M_S$) und dazugehörigem Schwellenwinkel ($\beta_S$) errechnet ($a = M_S - b\beta_S$);

c) den Anziehvorgang im wesentlichen dann beendet, wenn die Summe ($\Sigma (M(\beta) - y)$) über die Differenz zwischen gemessenem Drehmoment (M) und der so ermittelten Geraden ($y = a + b\beta$) um einem voreingestellten Betrag ($d_2$) von Null abweicht.

3. Verfahren nach einem der vorhergehenden Ansprüche, dadurch gekennzeichnet, daß man die mittlere Kurvensteigung (b) aus einer Mittelung über ein voreingestelltes Winkelintervall ermittelt.

4. Verfahren nach einem der Ansprüche 1 oder 2, dadurch gekennzeichnet, daß man bei der Ermittlung der Kurvensteigung (b) den sich aus einer (über ein voreingestelltes Winkelintervall) gleitenden Mittelung ergebenden maximalen Steigungswert als Kurvensteigung (b) dem weiteren Verfahren zugrundegelegt.

5. Verfahren nach einem der Ansprüche 1 oder 2, dadurch gekennzeichnet, daß man bei der Ermittlung der Kurvensteigung (b) zunächst den fortlaufenden Mittelwert über die seit Überschreiten des Schwellenmomentes ($M_S$) festgestellten Steigungswerte bildet und den dem weiteren Verfahren zugrundegelegten Steigungswert (b) mit jeder neuen Mittelwertsbildung aktualisiert, und daß man die fortlaufende Ermittlung des Steigungswertes dann unter Festhalten des letzten Steigungswertes beendet, wenn der nächste ermittelte Steigungswert um einen vorbestimmten Betrag vom Mittelwert abweicht.

6. Vorrichtung zur Durchführung des Verfahrens nach einem der Ansprüche 1 bis 5, mit Antriebsmitteln (10), Meßwertgebern (Drehwinkelgeber 11, Drehmomentgeber 12) zwischen den Antriebsmitteln (10) und Verbindungsmitteln (Werkzeugaufnahme 15) zum lösbaren Koppeln der Antriebsmittel (10) mit dem anzuziehenden Teil (Mutter, Schraube) der Schraubverbindung, mit Steuerungsmitteln (17-20) zum Beurteilen der Ausgangssignale der Meßwertgeber (11, 12) und davon abhängigem Steuern (Abschalten) der Antriebsmittel (10), und mit Dateneingabemitteln (21) zum Eingeben der Schraubparameter, dadurch gekennzeichnet, daß die Steuerungsmittel umfassen:

a) eine (Analog-oder Digital-) Recheneinheit (20), welcher die von den Meßwertgebern (11, 12) kommenden Signale zugeführt werden;

b) eine erste Vergleichereinrichtung, die das Drehmoment (M) mit einem voreingestellten Wert (Schwell moment $M_S$) vergleicht und ein erstes Ausgangssignal ($A_S$) bei Überschreiten des Wertes ($M_S$) abgibt;

c) bei Vorliegen des ersten Ausgangssignals ($A_S$) den Wert der Kurvensteigung (b) des Drehmomentes (M) über den Drehwinkel ($\beta$) ermittelt;

d) einen Wert (a) aus der Differenz zwischen Schwellenmoment ($M_s$) und dazugehörigem Schwellenwinkel ($\beta_S$) errechnet ($a = M_S - b\beta_S$);

e) ein Signal (A) zum Abschalten der Antriebsmittel (10) dann liefert, wenn das momentan gemessene Drehmoment ($M(\beta)$) vom Wert der so ermittelten Geraden ($y = a + b\beta$) um einen voreingestellten Betrag ($d_1$) abweicht.

7. Vorrichtung zur Durchführung des Verfahrens nach einem der Ansprüche 1 bis 5, mit Antriebsmittel (10), Meßwertgebern (Drehwinkelgeber 11, Drehmomentgeber 12) zwischen den Antriebsmitteln (10) und Verbindungsmitteln (Werkzeugaufnahme 15) zum lösbaren Koppeln der Antriebsmittel (10) mit dem anzuziehenden Teil (Mutter, Schraube) der Schraubverbindung, mit Steuerungsmitteln (17 bis 20) zum Beurteilen der Ausgangssignale der Meßwertgeber (11, 12) und davon abhängigem Steuern (Abschalten) der Antriebsmittel (10), und mit Dateneingabemitteln (21) zum Eingeben der Schraubparameter, dadurch gekennzeichnet, daß die Steuerungsmittel umfassen:

a) eine (Analog-oder Digital-) Recheneinheit (20), welcher die von den Meßwertgebern (11, 12) kommenden Signale zugeführt werden;

b) eine erste Vergleichereinrichtung, die das Drehmoment (M) mit einem voreingestellten Wert (Schwellmoment $M_S$) vergleicht und ein erstes Ausgangs signal ($A_S$) bei Überschreiten des Wertes ($M_S$) abgibt;

c) bei Vorliegen des ersten Ausgangssignals ($A_S$) den Wert der Kurvensteigung (b) des Drehmomentes (M) übe den Drehwinkel ($\beta$) ermittelt;

d) einen Wert (a) aus der Differenz zwischen Schwellenmoment ($M_S$) und dazugehörigem Schwellenwinkel ($\beta_S$) errechnet ($a = M_S - b\beta_S$);

e) ein Signal (A) zum Abschalten der Antriebsmittel (10) dann liefert, wenn die Summe ($\Sigma (M(\beta) - y)$) über die Differenz zwischen gemessenem Drehmoment (M) und der so ermittelten Geraden um einen voreingestellten Betrag ($d_2$) von Null abweicht.

8. Vorrichtung nach einem der Ansprüche 6 oder 7, dadurch gekennzeichnet, daß die Steuerungsmittel (20) derart ausgebildet sind, daß die mittlere Kurvensteigerung (b) aus einer Mittelung über ein voreingestelles Winkelintervall erfolgt.

9. Vorrichtung nach einem der Ansprüche 6 oder 7, dadurch gekennzeichnet, daß die Steuerungsvorrichtung (20) derart ausgebildet ist, daß bei der Ermittlung der Kurvensteigung (b) der sich aus einer (über ein voreingestelltes Winkelintervall) gleitenden Mittlung ergebende maximale Steigungswert als Kurvensteigung (b) der weiteren Berechnung zugrundegelegt wird.

10 Vorrichtung nach einem der Ansprüche 6 oder 7, dadurch gekennzeichnet, daß die Steuerungsvorrichtung (20) derart ausgebildet ist, daß bei der Ermittlung der Kurvensteigung (b) zunächst der fortlaufende Mittelwert über die seit Auftreten des ersten Ausgangssignals ($A_S$) festgestellten Steigungswerte gebildet und der der weiteren Berechnung zugrundegelegte Steigungswert (b) mit jeder neuen Mittelwertsbildung aktualisiert werden, und daß die fortlaufende Ermittlung des Steigungswertes dann unter Festhalten des letzten Steigungswertes beendet wird, wenn der nächste ermittelte Steigungswert um einem vorbestimmten Betrag vom Mittelwert abweicht.

11. Vorrichtung nach einem der Ansprüche 6 bis 10, dadurch gekennzeichnet, daß die Steuerungsmittel eine Verknüpfungseinrichtung umfassen, die mit dem Drehwinkelgeber (11) verbunden sind und dann das Signal (A) zum Abschalten der Antriebsmittel (10) an die Motorsteuerung (17) weitergeben, wenn nach dem Erscheinen des Abschaltsignals (A) die Antriebsmittel (10) einen vorbestimmten Winkelbetrag ($\beta_n$) weitergedreht haben.

12. Vorrichtung nach einem der Ansprüche 6 bis 11, dadurchgekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn die den Antriebsmitteln (10) zugeführte Leistung einen vorbestimmten Wert überschreitet.

13. Verfahren nach einem der Ansprüche 6 bis 12, dadurch gekennzeichnet, daß die Steuerungsmittel derart ausgebildet sind, daß zusätzlich (mit Priorität) dann ein Abschaltsignal (A) an die Motorsteuerung (17) geliefert und ein Störungssignal abgegeben wird, wenn trotz Energiezufuhr zu den Antriebsmittel (10) keine Änderung des Drehwinkels ($\beta$) erfolgt.

14. Vorrichtung nach einem der Ansprüche 6 - 13, dadurch gekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn bei Vorliegen des ersten Ausgangssignals ($A_S$) ein zusätzlicher, vorgegebener Maximaldrehwinkel ($\beta_{max}$) erreicht ist und dennoch ein vorgegebenes Mindestdrehmoment ($M_{min}$) nicht erreicht ist.

15. Vorrichtung nach einem der Ansprüche 6 bis 14, dadurch gekennzeichnet, daß die Steuerungsmittel (20) derart ausgebildet sind, daß zusätzlich (mit Priorität) dann ein Abschaltsignal (A) an die Motorsteuerung (17) geliefert und ein Störungssignal abgegeben wird, wenn bei Vorliegen des ersten Ausgangssignals ($A_S$) ein vorgegebenes Maximaldrehmoment ($M_{max}$) erreicht ist und dennoch ein vorgegebener Mindestdrehwinkel ($\beta_{min}$) nicht erreicht ist.

16. Vorrichtung nach einem der Ansprüche 6 - 15, dadurch gekennzeichnet, daß die Antriebsmittel einen Drehstrommotor (10) mit vorgesetztem Getriebe (13) und die Steuerungsmittel zur Motorsteuerung einen Vier-Quadrantenregler (17) umfassen.

Fig. 1

Fig. 2

Fig. 3

16

17

18

19

10

13

11 / 12

14

15

20

22

21

Fig. 4